(19) Europäisches Patentamt
European Patent Office
Office européen des brevets

(11) Publication number: **0 049 059**
**B1**

(12) # EUROPEAN PATENT SPECIFICATION

(45) Date of publication of patent specification: **02.01.86**

(51) Int. Cl.$^4$: **H 04 L 27/14,** H 03 M 1/00, H 03 D 3/00

(21) Application number: **81304076.3**

(22) Date of filing: **07.09.81**

(54) **Pulse code demodulator for frequency shift keyed data.**

(30) Priority: **25.09.80 CA 361021**

(43) Date of publication of application:
**07.04.82 Bulletin 82/14**

(45) Publication of the grant of the patent:
**02.01.86 Bulletin 86/01**

(84) Designated Contracting States:
**AT DE FR GB**

(56) References cited:
**CH-A- 601 954**
**GB-A-1 201 216**
**GB-A-1 465 871**
**GB-A-2 000 345**

(73) Proprietor: **NORTHERN TELECOM LIMITED**
**1600 Dorchester Boulevard West**
**Montreal Quebec H3H 1R1 (CA)**

(72) Inventor: **Champagne, Claude Jean Joseph**
**R.R. 1 Box 120**
**Carleton Place Ontario, K7C 3P1 (CA)**
Inventor: **Munter, Ernst August**
**4 Nanook Crescent**
**Kanata Ontario, K2L 2A7 (CA)**

(74) Representative: **Crawford, Andrew Birkby et al**
**A.A. THORNTON & CO. Northumberland House**
**303-306 High Holborn**
**London WC1V 7LE (GB)**

**EP 0 049 059 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a circuit for decoding a pulse code modulated (PCM) signal and more particularly to one which directly decodes frequency shift keyed (FSK) data from a PCM signal.

Frequency shift keying has been commonly utilized to transmit data at voice band frequencies over telephone lines. The voice band information in turn, may be transmitted as a PCM signal. Thus a data signal will be initially modulated to an FSK signal and later further encoded into PCM.

While the data signal could be decoded in two stages (from PCM to FSK to data) it would be desirable to directly convert from PCM to data. Discrimination between the marks and spaces of a received PCM encoded FSK data signal might be done by digitally counting the number of digital samples between successive zero-crossings. However, to do so the minimum difference in the periods between the two FSK signals must be at least twice the sampling period of the PCM signal. A standard voiceband PCM signal is sampled at an 8 KHz rate and thus has a period of 0.125 msec. One FSK standard utilizes frequencies having a period of 0.934 msec. (1070 Hz) and 0.787 msec. (1270 Hz) so that the difference in their periods is 0.147 msec. To discriminate between these two frequencies the maximum sampling period of the PCM signal must be less than one-half this difference (i.e. 0.147/2 = 0.073 msec.) much less than the PCM standard of 0.125 msec. It will be evident therefore that a more precise determination of the zero-crossings must be made in order to directly determine the data from the PCM signal.

GB—A—2000345 shows a device for digitally detecting a frequency in a PCM signal, an up/down counter is provided which receives "a" up-count pulses when there is a change of sign in the signal to be checked and which receives "r" down-count pulses when there is no change of sign in this signal. The numbers "a" and "r" are determined as a function of the ratio between the sampling frequency of the PCM signal and the frequency to be detected, so that it is possible to deduce the presence of this frequency from a balance between the number of up-count pulses and the number of down-count pulses.

Patent Specification GB—A—1201216 proposes a zero crossing detector for a frequency-shift keyed carrier wave which produces an output signal which is proportional to the number of the zero crossings of the carrier wave in a given interval of time which, in turn, is directly related to the frequency of the carrier wave.

It has been discovered that a high resolution estimate of the zero-crossing instant of the PCM encoded FSK signal can be interpolated from a comparison of the magnitude of the PCM samples before and after each zero crossing. From this information, the true position of the zero crossing can be estimated with sufficient accuracy that direct recovery of the FSK data from the PCM samples can be achieved.

Thus, in accordance with the present invention there is provided a demodulator for directly decoding frequency shift keyed date in a pulse code modulated signal having magnitude bits and a sign bit, comprising means for detecting a change in the sign bit, characterised by:

means for generating an interpolated signal count based on the values represented by the magnitude bits of samples of the pulse code modulated signal immediately preceding and succeeding the zero crossing of the frequency shift keyed date signal to indicate its position relative to the succeeding sampling instant of the pulse code modulate signal;

an accumulator;

means responsive to the detection of an initial change in the sign bit for initializing the accumulator to the interpolated signal count, and responsive to the detection of no change in the sign bit occurring between succeeding signal samples for adding the maximum value of the interpolated count to the accumulator, and responsive to the next change in the sign bit for adding the complement of the next interpolated signal count to the accumulator;

means responsive to the instant count in the accumulator after detection of said next change in the sign bit, for generating a mark or a space when said count is less than or greater than a selected value so as to directly decode the frequency shift keyed data.

In a particular embodiment, the demodulator additionally includes a comparison means for generating a comparison control signal when the instant count in the accumulator is greater than a selected minimum value and less than a selected maximum value. Also included is a means for generating a threshold control signal when the magnitude of at least one sample between adjacent changes in the sign bit exceeds a minimum value. The occurrence of these two signals in turn generates a gate control signal. A further accumulator means integrates the occurrencies of the gate control signal from a minimum to a maximum value, and a means responsive to a selected minimum number of occurrencies stores in the accumulator is utilized to gate the decoded frequency keyed data to the output of the demodulator.

Features and advantages of the present invention will become apparent from the following description of an embodiment thereof given by way of example with reference to the accompanying drawings in which the single figure is a block schematic diagram of a demodulator in accordance with the present invention.

In the following description which refers to the single figure, the detailed structure of the demodulator will be evident from the accompanying description of its function and operation. While only single channel operation is described, it will be evident that the circuit could be readily modified by the addition of storage registered to demodulate multi-channel signals on a time shared basis. It is well known that PCM signals can be manipulated in serial or parallel form. The standard PCM voice band signal is sampled at an 8 KHz rate, each of which consists of 8 bits identified as follows:

7 = sign bit;
6 = most significant magnitude bit;
5 = next most significant magnitude bit; and
0 = least significant magnitude bit.

In the following description, the relevant bit numbers or the number of bits being manipulated will be indicated adjacent a double bar on each signal path.

Referring to the single figure, an 8 bit serial PCM signal is connected from an input 10 to a serial-to-parallel converter 11 driven by a 64 KHz clock 12 (assuming single channel operation). The PCM signal is encoded from FSK date having standard frequencies of 1270 Hz (mark) and 1070 Hz (space) at a 300 band rate. The 8 bits are then coupled in parallel thorugh a one frame delay register 13. The sign bit 7 from the converter 11 is connected together with the inverted and delayed sign bit from the register 13, to an AND gate 14 in order to detect a change in the sign bit indicating a positive-going zero crossing of the encoded FSK signal at its output. Both the zero crossing signal and the clock are connected to the input of a sequence timing control 15. The six most significant magnitude bits 6—1 from the converter 11 and the register 13 are connected to an interpolation read-only-memory (ROM) 20 which generates at its output a 4 bit digital signal based on the equivalent linear values of the magnitude of the sample succeeding the zero crossing divided by the sum of the succeeding sample and the one preceding it (i.e. the one immediately preceding the zero crossing). This indicates the relevant position of the zero crossing with respect to the succeeding sampling instant of the pulse code modulated signal. While sinusoidal interpolation might be used in specific applications, straight line or linear interpolation was found to give better results when the incoming signal was unknown. Both this signal, from a generator 40 and a 4 bit binary signal equivalent to the maximum count of 15 from the ROM 20, are connected to a multiplexer 21. When a zero crossing is detected, the sequence timing control 15 connects the output from the ROM 20 through the multiplexer 21 to the B input of an arithmetic logic unit 22. Conversely, when no zero crossing is detected, the 4 bit binary signal, from the generator (not shown), equivalent to a maximum count of 15, is connected to the B input of the arithmetic logic unit 22.

When an initial zero-crossing is detected during a PCM signal sample, the complement of the digital signal on the B input of the arithmetic logic unit 22 is added to that which is present at its A input (i.e. the current sum in the accumulator 23). The accumulator 23 is then updated with this new sum which is transferred through an 8 bit line under control of the control unit 15. After this sum is processed (as described below), the accumulator 23 is immediately initialized for the next calculation, with the same digital signal (i.e. not its complement) on the B input of the arithmetic logic unit 22. Thereafter, when each PCM signal sample occurs with no detection of a change in the sign bit, the maximum count of 15 at the B input is added to the current number in the accumulator 23 which is present at the A input of the arithmetic logic unit 22. The accumulator 23 is then updated with this new total. This continues until the next change in the sign bit is detected whereupon the logic unit 22 adds the complement of the next following interpolated signal count from the output of the ROM 20, so that the difference between the maximum count of 15 and the next following interpolated signal count, is added to and then stored in the accumulator 23. The sum stored in the accumulator 23 is then processed by a comparator 25, under control of the timing control 15. The comparator 25 compares the 8 bit summed output of the accumulator 23 at its A input against an 8 bit binary number of 103 from a generator 40 at its threshold input T. After processing, the accumulator 23 is again initialized for the next calculation.

With an interpolation range of 15 and a PCM sampling rate of 8 KHz, the effective sampling rate is 15 × 8 KHz = 120 KHz. When an FSK signal of 1070 Hz is being transmitted, the total count in the accumulator at the end of one period will be about 120,000/1070 = 112, whereas when an FSK signal of 1270 Hz is being transmitted, the total count in the accumulator will be about 120,000/1270 = 94. The average of these two is then 103 which is the reference number from a generator 40 utilized in the comparator 25. Hence, if the comparison indicates the number at its A input is equal to or less than 103, a logic 1 indicating a mark is coupled to the inverted input of NAND gate 26. Conversely, if the number is greater than 103, a logic 0 indicating a space is connected to this input.

Additional signal level and carrier frequency checks are also made before acceptance of the demodulated data signal from the NAND gate 26. The signal level is checked by determining the presence of either of the two most significant magnitude bits 6 or 5 from the output of the converter 11 to indicate whether a signal reference level of −30 DBM has been reached. Whenever the incoming binary signal has a magnitude greater than the reference level, an output from OR gate 30 is connected through an OR gate 31 to set up a D flip-flop 32. The flip-flop 32 in turn is held in a latched condition by a return signal from its Q output coupled through the OR gate 31 until reset by the sequence counting control 15 after detection of a zero crossing.

To determine that the detected carrier frequency is within range, the 8 bit output of the accumulator 23 is also connected to the A input of comparator 35. Low and high frequency reference signals from generators representing a count of 33 and 128 respectively, are also connected to the comparator 35 so that an output will be obtained only when the count from the accumulator is between these two numbers. With 120 KHz sampling, these counts of 33 and 128 represent a frequency range from 3610 to 945 Hz respectively.

When the incoming PCM signal is within magnitude and frequency limits, the two inputs from the flip-flop 32 and the comparator 35 produce an output from AND gate 36 which is connected to an accumulator 37 having minimum and maximum limits of 0 and 255. When the accumulator reaches a count of 128, an output is obtained on the most significant bit stage which then opens the NAND gate 26 to couple the demodulated data to the output of the demodulator.

**Claims**

1. A demodulator for directly decoding frequency shift keyed data in a pulse code modulated signal having magnitude bits and a sign bit, comprising means (14) for detecting a change in the sign bit, characterised by:

means (13, 20) for generating an interpolated signal count based on the values represented by the magnitude bits of samples of the pulse code modulated signal immediately preceding and succeeding the zero crossing of the frequency shift keyed data signal to indicate its position relative to the succeeding sampling instant of the pulse code modulated signal;

an accumulator (23);

means (15, 21, 22) responsive to the detection of an initial change in the sign bit for initializing the accumulator to the interpolated signal count, and responsive to the detection of no change in the sign bit occurring between succeeding signal samples for adding the maximum value of the interpolated count to the accumulator, and responsive to the next change in the sign bit for adding the complement of the next interpolated signal count to the accumulator;

means (25) responsive to the instant count in the accumulator (23) after detection of said next change in the sign bit, for generating a mark or a space when said count is less than or greater than a selected value so as to directly decode the frequency shift keyed data.

2. A demodulator as defined in claim 1 characterised by the interpolated signal count is linearly proportional to the equivalent linear values of the magnitude of the succeeding sample, divided by the sum of the magnitudes of the preceding and succeeding samples.

3. A demodulator as defined in claim 1 characterised by the detection of the change in the sign bit is always in the same direction.

4. A demodulator as defined in claim 3 further characterised by:

comparision means (35) for generating a comparison control signal when said instant count in the acumulator (23) is greater than a selected minimum value and less than a selected maximum value;

means (30, 31, 32) for generating a threshold control signal when the magnitude of at least one sample between adjacent changes in the sign bit exceeds a selected minimum value; and

means (36) for generating a gated control signal when the comparison and threshold signals occur concurrently; and

a further accumulator (37) for integrating the occurrences of the gated control signal from a minimum to a maximum value; and

means (26) responsive to a selected minimum number of occurrences stored in the further accumulator (37) for gating the decoded frequency shift keyed data to the output of the demodulator.

**Revendications**

1. Démodulateur pour le décodage direct de données codées par variation de fréquence dans un signal à modulation par impulsions codées ayant des bits d'amplitude et un bit de signe, comprenant un moyen (14) pour détecter un changement dans le bit de signe, caractérisé par:

— un moyen (13, 20) pour produire un comptage interpolé de signaux sur la base des valeurs représentées par les bits d'amplitude d'échantillon du signal à modulation par impulsions codées précédant et suivant immédiatement le passage par zéro du signal de données codées par variation de fréquence afin d'indiquer sa position par rapport à un instant d'échantillonnage suivant du signal à modulation par impulsions codées;

— un accumulateur (23);

— un moyen (15, 21, 22) répondent à la détection d'un changement initial dans le bit de signe pour initialiser l'accumulateur au comptage interpolé de signaux, et répondant à la détection de l'absence de changement dans le bit de signe se produisant entre échantillons successifs de signal pour ajouter la valeur maximum du comptage interpolé à l'accumulateur, et répondant au changement suivant du bit de signe pour ajouter à l'accumulateur le complément du comptage interpolé suivant de signaux;

— un moyen (25) répondant au comptage instantané dans l'accumulateur (23) après détection du changement suivant du bit de signe, pour produire une marque ou un espace lorsque le comptage est inférieur ou supérieur à une valeur sélectionnée de manière à décoder directement les données codées par variation de fréquence.

2. Démodulateur selon la revendication 1, caractérisé en ce que le comptage interpolé de signaux est linéairement proportionnel aux valeurs linéaires équivalentes des amplitudes de l'échantillon suivant, divisée par la somme des amplitudes des échantillons précédent et suivant.

3. Démodulateur selon la revendication 1, caractérisé en ce que la détection du changement du bit de signe est toujours dans le même sens.

4. Démodulateur selon la revendication 3, caractérisé en ce qu'il comprend en outre:

— un moyen de comparaison (35) pour produire un signal de commande de comparaison lorsque le comptage instantané dans l'accumulateur (23) est supérieur à une valeur minimum sélectionnée et inférieur à une valeur maximum sélectionnée;

— un moyen (30, 31, 32) pour produire un signal de commande de seuil lorsque l'amplitude d'au moins un échantillon entre changements adjacents du bit de signe dépasse un valeur minimum sélectionnée; et

— un moyen (36) pour produire un signal de commande déclenché lorsque les signaux de comparaison et de seuil se produisent simultanément; et

— un autre accumulateur (37) pour intégrer les occurrences du signal de commande déclenché entre une valeur minimum et une valeur maximum; et

— un moyen (26) répondant à une nombre minimum sélectionné d'occurrences stockées dans l'autre accumulateur (37) pour déclencher à la sortie du démodulateur les données codées par variation de fréquence décodées.

**Patentansprüche**

1. Demodulator zum direkten Decodieren frequenzumgetasteter Daten in einem impulscodemodulierten Signal mit Größenbits und einem Vorzeichenbit, mit Mitteln (14) zum Erfassen einer Änderung des Vorzeichenbits, gekennzeichnet durch: Mittel (13, 20) zur Erzeugung eines interpolierten Signalzählwertes aufgrund der durch die Größenbits der Worte des impulscodemodulierten Signales repräsentierten Werten unmittelbar vor und nach dem Nulldurchgang des frequenzumgetasteten Datensignales zur Anzeige seiner Lage relativ zu dem darauffolgenden Abtastmoment des impulscodemodulierten Signales;

einen Akkumulator (23);

Mittel (15, 21, 22), die auf die Erfassung eines anfänglichen Wechsels des Vorzeichenbits reagieren zur Initialisierung des Akkumulators zu dem interpolierten Signalzählwert und auf die Erfassung, daß kein Wechsel des Vorzeichenbit zwischen aufeinanderfolgenden Signalworten auftritt zur Addierung des Maximalwertes des interpolierten Zählwertes zu dem Akkumulator, und auf den nächsten Wechsel des Vorzeichenbits reagieren durch Hinzufügen des Komplementes des nächsten interpolierten Signalzählwertes zu dem Akkumulator;

Mittel (25) die auf den augenblicklichen Zählwert im Akkumulator (23) nach Erfassung des nächsten Wechsels des Vorzeichenbits reagieren zur Erzeugung einer Marke oder eines Zwischenraumes, wenn der Zählwert kleiner als bzw. größer als ein ausgewählter Wert ist, um so direkt die frequenzumgetasteten Daten zu decodieren.

2. Demodulator nach Anspruch 1, dadurch gekennzeichnet, daß der interpolierte Signalzählwert linear proportional zu den Äquivalent-Linearwerten der Größe des nachfolgenden Wortes, geteilt durch die Summe der Größen des vorhergehenden und des nachfolgenden Wortes ist.

3. Demodulator nach Anspruch 1, dadurch gekennzeichnet, daß die Erfassung des Wechsels des Vorzeichenbit stets in der gleichen Richtung erfolgt.

4. Demodulator nach Anspruch 3, weiter gekennzeichnet durch:

Komparatormittel (35) zur Erzeugung eines Vergleichs-Steuersignals, wenn der augenblickliche Zählinhalt im Akkumulator (23) größer als ein ausgewählter Minimalwert und kleiner als ein ausgewählter Maximalwert ist; Mittel (30, 31, 32) zur Erzeugung eines Schwellwert-Steuersignals, wenn die Größe mindestens eines Wortes zwischen benachbarten Wechseln des Vorzeichenbits einen ausgewählten Minimalwert übersteigt; und

Mittel (36) zur Erzeugung eines Durchleit-Steuersignals, wenn das Vergleichs- und das Schwellwertsignal gleichzeitig auftreten; und

einen weiteren Akkumulator (37) zum Integrieren der Auftritte des Durchleit-Steuersignals von einem Minimal- zu einem Maximalwert; und

Mittel (26), die auf eine ausgewählte Minimalzahl von in dem weiteren Akkumulator (37) gespeicherten Auftretenschäufigkeiten mit Durchleiten des decodierten frequenzumgetasteten Datensignals zum Ausgang des Demodulators reagieren.

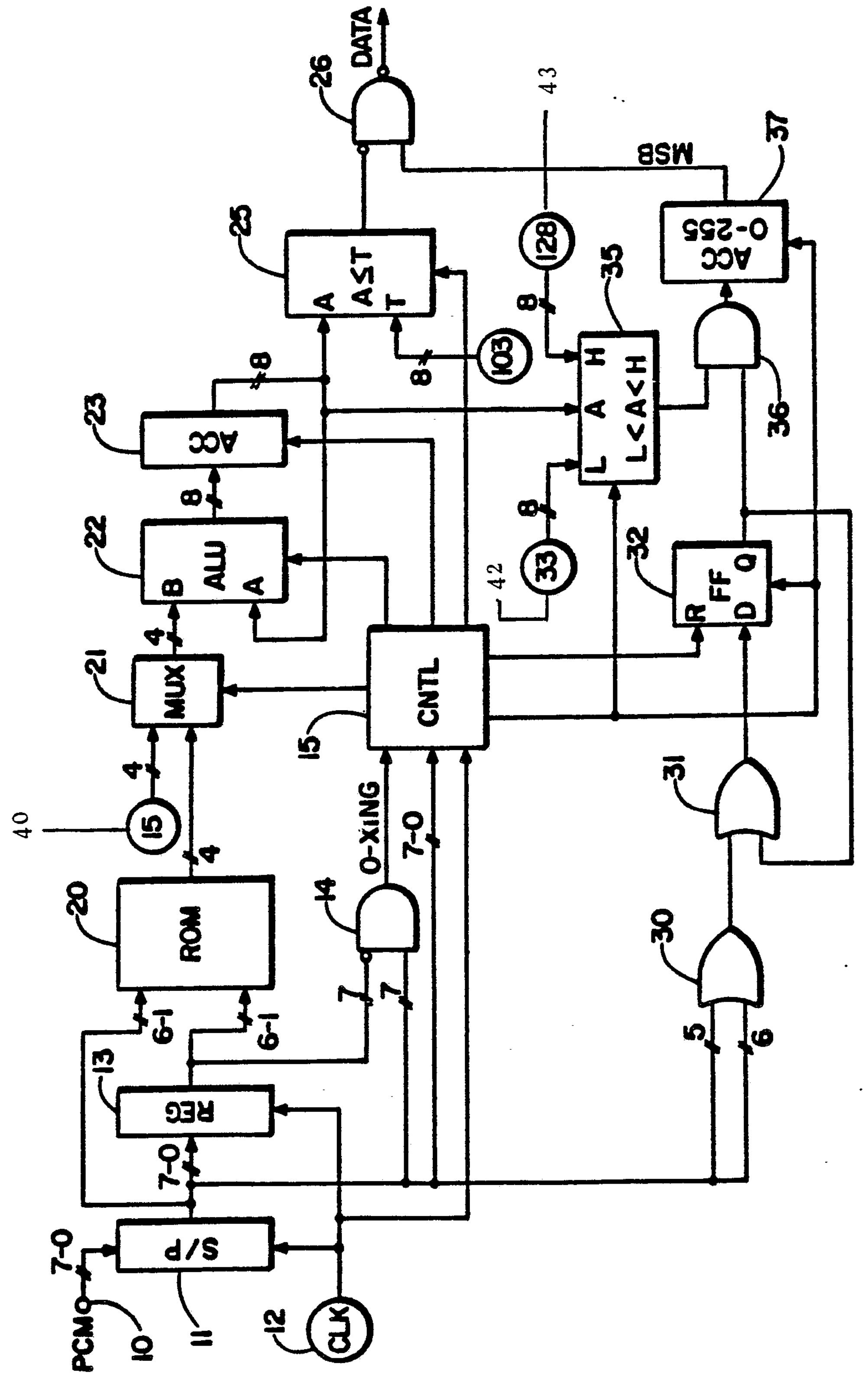
PCM
CLK
S/P
REG
ROM
MUX
ALU
ACC
CNTL
0-XING
A≤T
L<A<H
FF
ACC 0-255
MSB
DATA